# FASCICULE DE BREVET EUROPEEN

(11) **EP 1 778 804 B1**
(45) Date de publication et mention de la délivrance du brevet: **20.01.2010**
(21) Numéro de dépôt: 05778874.7
(22) Date de dépôt: 21.06.2005
(51) Int. Cl.: C09D 133/14, C09D 133/06

(54) **SYSTEME MONO COMPOSANT A BASE DE LATEX COREACTIFS, PROCEDE DE PREPARATION ET APPLICATION DANS LE DOMAINE DES REVETEMENTS EXEMPTS DE FORMOL**
EINKOMPONENTIGES SYSTEM AUF BASIS EINES MITREAKTIVEN LATEX, HERSTELLUNGSVERFAHREN UND VERWENDUNG AUF DEM GEBIET DER FORMOLFREIEN BESCHICHTUNGEN
SINGLE-COMPONENT SYSTEM BASED ON CO-REACTIVE LATEX, PREPARATION METHOD AND USE IN THE FIELD OF FORMOL-FREE COATINGS

(30) Priorité: 25.06.2004 FR 0406996
(43) Date de publication de la demande: 02.05.2007
(73) Titulaire: ARKEMA FRANCE, 92700 Colombes (FR)
(72) Inventeur: VERGE, Christophe, F-60580 Coye La Forêt (FR); COCHET, Françoise, F-69530 BRIGNAIS (FR); KLEIN, Sophie, F-57500 Saint-Avold (FR)
(74) Mandataire: Hirsch & Associés
(86) Numéro de dépôt international: PCT/FR2005/001547
(87) Numéro de publication internationale: WO 2006/010804

(56) Documents cités:
- WO-A1-96/14355
- FR-A1- 2 762 606

## Description

La présente invention porte sur un système monocomposant à base d'un mélange de latex coréactifs, stable au stockage, conduisant à des revêtements exempts de formol, réticulables à température ambiante et post-réticulables par traitement thermique.

L'industrie des revêtements (peinture, adhésifs, papier, cuir, textile, encres) utilise des latex comme liants dans des formulations filmogènes qui nécessitent dans certains cas une post-réticulation destinée à améliorer les propriétés des revêtements obtenus, en particulier les propriétés mécaniques, la résistance à l'eau et aux solvants, la réduction du collant superficiel - ce qui permet notamment de diminuer, dans le cas des peintures extérieures, le potentiel de salissure - ou encore la dureté.

Cette étape de post-réticulation doit être adaptée au domaine d'application et aux conditions de mises en oeuvre du revêtement : ainsi, le domaine des peintures oblige à procéder à une température proche de la température ambiante, voire inférieure , alors que l'industrie textile utilise couramment des procédés de thermoréticulation à des températures supérieures à 130°C.

Quelle que soit l'application visée, l'objectif est néanmoins d'obtenir un système le plus réactif possible à la température la plus basse possible, tout en étant monocomposant, c'est-à-dire prêt à l'emploi et stable au stockage, les deux exigences étant bien souvent antagonistes.

Par ailleurs, les contraintes en matière de protection des personnes et de l'environnement font qu'un autre objectif consiste à réduire les émissions de composés organiques volatils, tels que le formol (très fréquent dans les liants pour le textile à base de N-méthylolacrylamide), ou les solvants utilisés pour la plastification temporaire des latex (diminution de la température de filmification sans diminution de la température de transition vitreuse du copolymère et donc sans diminution des propriétés mécaniques du film), etc...

Le brevet américain US-A-5468800, la demande internationale WO-A-95/09896 et le brevet allemand n°4439457 décrivent l'utilisation d'un monomère à fonction uréido dans la synthèse de latex conduisant à des films-exempts de formol, réticulables à température ambiante par post-addition d'un polyaldéhyde masqué ou non. Est également mentionnée la possibilité d'utiliser des aldéhydes copolymérisables, comme la (méth)acroléine, ou des aldéhydes masqués, tels que l'acrylate de diéthoxypropyle, le méthacryloyloxopropyl-1,3-dioxolane, le N-(1,1-diméthoxy-but-4-yl)méthacrylamide ou l'acrylamido-butyraldéhyde diéthyl acétal, ces monomères étant associés au monomère uréido lors de la synthèse du latex.

Le principal inconvénient de ces systèmes réside dans leur manque de stabilité au stockage. La présence, dans le latex, de petites molécules réactives capables de diffuser dans les particules ou la coexistence, au sein d'un même latex, des deux types de fonctions co-réactives, sont en effet susceptibles d'induire un phénomène de pré-réticulation, qui limite la post-réticulation à l'étape de séchage et peut même dans certains cas gêner la coalescence.

Selon FR-A-2762606 et FR-A-2762607, on connaît un système mono composant à base d'un mélange de latex capable de répondre à l'ensemble de ces objectifs car il est stable au stockage et il conduit à des films réticulables à température ambiante, cette réticulation étant activée par un traitement thermique à haute température. L'absence de petites molécules réactives, susceptibles de diffuser dans les particules, garantit une meilleure stabilité au stockage, le système stabilisant du latex évitant jusqu'à l'étape de séchage le contact entre les particules et donc la réaction entre les fonctions co-réactives. De plus, la synthèse séparée des deux latex fonctionnalisés permet de préserver au mieux chacune des fonctions réactives, ce qui permet une plus grande efficacité en post-réticulation lors de la coalescence du film.

Dans FR-A-2762607, les systèmes mono-composants sont obtenus par mélange de latex fonctionnalisés, l'un par un monomère porteur d'un groupement de type uréido, et l'autre par un monomère porteur d'un groupement du type N-alkylol. Les revêtements ainsi obtenus présentent un taux de formol libre faible, mais néanmoins non nul.

Dans FR-A-2762606, les systèmes mono-composants sont obtenus par mélange de latex fonctionnalisés, l'un par un monomère porteur d'un groupement de type uréido, et l'autre par un monomère porteur d'un groupement aldéhyde masqué ou non. Les films obtenus sont totalement exempts de formol, ce qui permet de répondre au problème posé dans la demande FR-A-2762607. En revanche, l'accès aux monomères aldéhydes masqués ou non, cités dans la demande FR-A-2762606 et pour la plupart actuellement indisponibles à l'échelle commerciale industrielle, constitue l'un des inconvénients majeurs de ce système.

La demanderesse a maintenant trouvé un système mono composant à base d'un nouveau mélange de latex fonctionnalisés, qui est stable au stockage et conduit à des films totalement exempts de formol, réticulables à température ambiante, cette réticulation étant éventuellement activée par un traitement thermique à haute température.

L'invention permet ainsi de proposer une alternative au problème de disponibilité commerciale à l'échelle industrielle des matières premières décrites dans la demande FR-A-2762606. Ces nouvelles compositions de latex permettent de plus d'obtenir des revêtements dont les propriétés, en particulier les propriétés applicatives, telles que l'utilisation du système mono-composant selon l'invention en tant que liant destiné à l'industrie textile, sont améliorées. Les résultats présentés pour l'application textile sont d'autant plus intéressants qu'ils proposent une alternative performante au système classiquement utilisé dans l'industrie textile, à base de N-méthylolacrylamide, dont le principal inconvénient est la génération de formol libre dans le revêtement lors du traitement thermique des films.

Le nouveau système mono composant comprend un mélange de latex fonctionnalisés, l'un par un monomère porteur d'un groupement de type urée ou éthylène urée, et l'autre par un monomère porteur d'une fonction acétal, mercaptal, mercaptol, dioxolane ou dithiolane.

La présente invention a donc d'abord pour objet un système monocomposant à base de latex coréactifs, susceptible de conduire à des revêtements exempts de formol, réticulables à température ambiante et post-réticulables par traitement thermique, ledit système étant constitué par le mélange de deux dispersions de particules, (A) et (B), obtenues chacune par polymérisation en émulsion en milieu aqueux d'une composition de monomères respectivement A et B:
(a) au moins un monomère à insaturation éthylénique polymérisable par voie radicalaire, comportant un groupe fonctionnel, de formule A 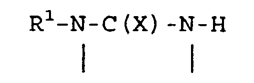 dans laquelle
   R¹ est un groupement polymérisable par voie radicalaire;
   X représente O ou S,
   entrant dans la composition de monomères A;
   et
(b) au moins un monomère à insaturation éthylénique polymérisable par voie radicalaire, comportant
   - un radical 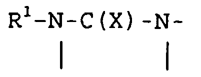 identique ou différent de celui du monomère (a), dans lequel R¹ est un groupement polymérisable par voie radicalaire et X représente O ou S ;
   - un groupe fonctionnel choisi parmi acétal, mercaptal, mercaptol, dioxolane et dithiolane, de formule B1

      B1 -CHOH- (G) -CH (YR³) (ZR⁴)
dans laquelle
- Y et Z, identiques ou différents, représentent O ou S ;
- G représente une liaison directe ou un reste alkylène en C₁-C₄;
- R³ et R⁴, identiques ou différents, représentent chacun un atome d'hydrogène ou un groupe alkyle en C₁-C₈, ou bien forment ensemble un groupe -CH₂-CR⁵R⁶-(CH₂)ₙ- où n = 0 ou 1 et R⁵ et R⁶, identiques ou différents, représentent chacun un atome d'hydrogène ou un groupe méthyle, entrant dans la composition de monomères B.

Les monomères (a) peuvent être choisis parmi ceux représentés par les formules (I) à (V) ci-après : 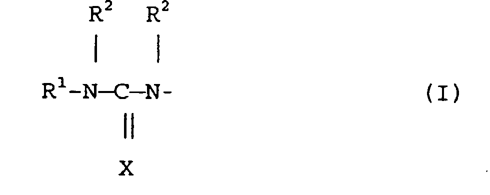 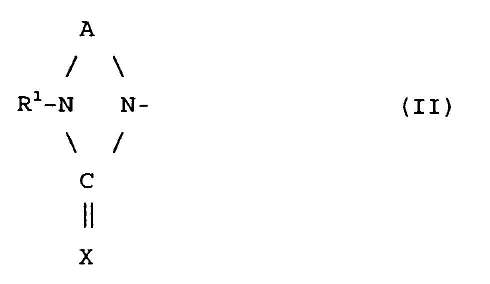 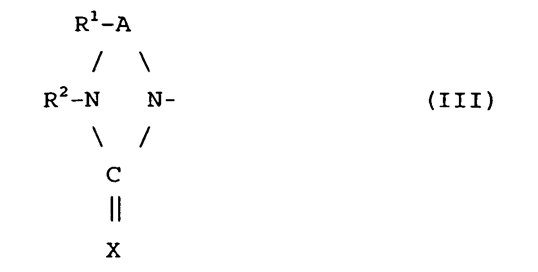 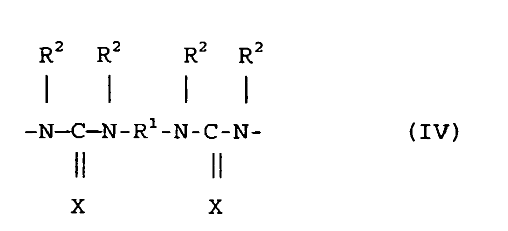 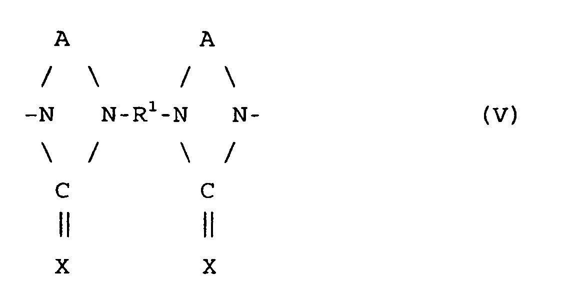 dans lesquelles :
X représente O ou S;
R¹ est un groupement à insaturation éthylénique, polymérisable par voie radicalaire;
R² est un atome d'hydrogène ou un groupe alkyle en C₁-C₈; et
A est une chaîne alkylène à 2 ou 3 atomes de carbone qui peut être substituée par alkyle inférieur en C₁-C₄ et/ou hydroxy et/ou alcoxy en C₁-C₄, et/ou qui peut être interrompue par un groupe carbonyle.

Le groupement R¹ peut être choisi parmi les groupes:
- CH₂=CH-
- CH₂=CH-CH₂-
- CH₂=C(CH₃) -CH₂-
- CH₂=CH-C(O)-
- CH₂=C(CH₃)-C(O)-
- CH₂=CH-CH₂-O-CH₂-CH(OH)-CH₂-
- R⁷-A¹-Alk-
où :
R⁷ représente un atome d' hydrogène, un groupement 3-alkyloxy-2-hydroxypropyle, vinyle, méthacryloyle, acryloyle ou méthacryloyloxyacéto;
A¹ représente O, NH ou NR⁸;
R⁸ représente 3-allyloxy-2-hydroxypropyle lorsque R⁷ représente 3-allyloxy-2-hydroxypropyle;
Alk représente une chaîne alkylène en C₂-C₈; et
   - 2-( beta -carboxyacrylamido)éthyle
   - R⁹-A²-C (O) -CH=CH-C (O) - A²- R⁹
où :
A² représente O ou NH ;
R⁹ représente un groupe alkylène en C₁-C₄.

A titre d'exemples de monomères (a), on peut citer la N-(2-méthacryloyloxyéthyl) éthylène urée, la N-(2-acryloyloxyéthyl) éthylène urée, la N-(méthacrylamidométhylène) éthylène urée, la N-(acrylamidométhylène)-éthylène urée, la N-( beta - méthacrylamidoéthyl)-éthylène urée, la N-( beta - acrylamidoéthyl)-éthylène urée, la N-vinyl-éthylène urée, la N-vinyloxyéthyl-éthylène urée, la N-[ beta - méthacryloyloxyacétamido)-éthyl]-N,N'-éthylène urée, la N-[ beta -acryloyloxyacétamido)-éthyl]-éthylène urée, la 1-[2-[[2-hydroxy-3-(2-propényloxy)propyl]amino]éthyl]-2-imidazolidone, la N-méthacrylamidométhyl urée, la N-méthacryloyl urée, le N-(3-[1,3-diazacyclohexan-2-one]propyl)méthacrylamide, la N-hydroxyéthyléthylène urée, la N-aminoéthyl éthylène urée, la N-(3-allyloxy-2-hydroxypropyl)aminoéthyl éthylène urée, la N-méthacrylaminoéthyl éthylène urée, la N-acrylaminoéthyl éthylène urée, la N-méthacryloxyacétoxyéthyl éthylène urée, la N-méthacryloxy-acétaminoéthyl éthylène urée et la N-di(3-allyloxy-2-hydroxy-propyl)aminoéthyl éthylène urée, la N-(2-acryloyl-oxy-éthyl)éthylène urée, la N-méthacrylamidométhyl urée, les allyl alkyl éthylène urées et les composés obtenus par réaction entre un diester d'acide dicarboxylique insaturé et un hydroxyalkylalkylène urée, un aminoalkylalkylène urée, un hydroxyalkylurée ou un aminoalkylurée. On peut citer notamment les produits de réaction de l'hydroxyéthyléthylène urée avec le diméthyl maléate, le diéthyl maléate, le diméthyl fumarate ou le diéthyl fumarate et en particulier le composé Cylink C4 commercialisé par la société Cytec.

Un monomère (a) particulièrement préféré est la N-(2-méthacryloyloxyéthyl)-éthylène urée, appelée aussi 1-(2-méthacryloyloxy-éthyl)-imidazolin-2-one ou méthacrylate d'éthyle imidazolidone (MEIO).

Concernant le monomère (b), le radical 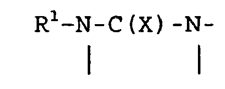 peut être identique ou différent de celui du monomère (a); les définitions de R¹ et X peuvent être identiques ou différentes dans les monomères (a) et (b). De préférence ce radical est identique; ceci est notamment obtenu par synthèse in-situ le milieu de polymérisation, du monomère (b) à partir du monomère (a).

En particulier, ce monomère (b) porteur d'un groupe fonctionnel choisi parmi acétal, mercaptal, mercaptol, dioxolane et dithiolane, de formule B1

B1 -CHOH- (G) -CH (YR³) (ZR⁴)

dans laquelle
- Y et Z, identiques ou différents, représentent O ou S ;
- G représente une liaison directe ou un reste alkylène en C₁-C₄;
- R³ et R⁴, identiques ou différents, représentent chacun un atome d'hydrogène ou un groupe alkyle en C₁-C₈, ou bien forment ensemble un groupe -CH₂-CR⁵R⁶-(CH₂)ₙ- où n = 0 ou 1 et R⁵ et R⁶, identiques ou différents, représentent chacun un atome d'hydrogène ou un groupe méthyle,
est généré in situ dans le milieu de polymérisation par réaction entre un monomère précurseur porteur d'un groupement de type urée ou éthylène urée (monomère (a)) et un composé porteur d'une fonction aldéhyde et précurseur de la fonction acétal, mercaptal, mercaptol, dioxolane ou dithiolane de formule B'1 CHO-(G)-CH(YR³) (ZR⁴) dans laquelle G, Y, Z, R³, R⁴ sont tels que définis ci dessus.

A titre d'exemples, le composé porteur d'une fonction aldéhyde et précurseur de la fonction acétal, mercaptal, mercaptol, dioxolane ou dithiolane peut être choisi parmi le 2,2-diméthoxyacétaldéhyde, le 2,2-diéthoxyacétaldéhyde, le 2,2-dipropoxyacétaldéhyde, le 2,2-dibutoxyacétaldéhyde, le 3,3-diméthoxypropanal, le 3,3-diéthoxypropanal, le 3,3-dipropoxypropanal, le 3,3-dibutoxypropanal, le 4,4-diméthoxybutanal, le 4,4-diéthoxybutanal, le 4,4-dipropoxybutanal, le 4,4-dibutoxybutanal, le 5,5-diméthoxypentanal, le 5,5-diéthoxypentanal, le 5,5-dipropoxypentanal, le 5,5-dibutoxypentanal, le 6,6-diméthoxyhexanal, le 6,6-diéthoxyhexanal, le 6,6-dipropoxyhexanal et le 6,6-dibutoxyhexanal.

Un composé porteur d'une fonction aldéhyde et précurseur de la fonction acétal particulièrement préféré est le 2,2 diméthoxyacétaldéhyde, appelé aussi 1,1-diméthyl acétal glyoxal ou 2,2-diméthoxyéthanal.

Ainsi, le système mono composant à base d'un mélange de latex coréactifs selon l'invention, a en particulier l'avantage d'utiliser des monomères précurseurs disponibles dans le commerce, ce qui peut simplifier la synthèse des films réticulables.

Une fois synthétisés, ces latex peuvent être mélangés sans que la réaction entre les fonctions précitées de chacun d'eux ne se produise au cours du stockage, et ils conduisent pendant ou après la coalescence à température ambiante à un film réticulé qui présente des propriétés améliorées par rapport aux latex de base, ladite réticulation pouvant être activée par un traitement thermique.

Cette nouvelle combinaison de latex est d'autant moins évidente qu'il ne suffit pas que les fonctions précitées réagissent entre elles seulement pendant ou après la coalescence, car il faut encore que la cinétique de réticulation ne perturbe pas la coalescence des particules et donc la formation du film -une trop grande vitesse de réticulation pourrait en effet gêner la formation du film et rendre un système inutilisable.

Conformément à l'invention, les synthèses séparées des deux latex fonctionnalisés permettent de préserver au mieux chacune des fonctions -la température de polymérisation étant généralement supérieure à la température ambiante-, ce qui permet une plus grande efficacité en post-réticulation lors de la coalescence du film (interdiffusion des chaînes entraînant la réaction entre les groupements fonctionnels): en effet, si les deux fonctions sont associées dans le même latex, on aura de la préréticulation et donc peu ou pas de post-réticulation et même peut-être des problèmes de coalescence.

Un autre avantage réside dans le fait que l'absence de petites molécules réactives, susceptibles de diffuser dans les particules, garantit une meilleure stabilité au stockage, puisque, tant que l'on est à l'état de latex, le système stabilisant du latex évite le contact des particules, et donc la réaction entre les deux types de fonctions co-réactives portées par chacune des dispersions

La préparation du monomère (b) s'effectue dans des conditions classiques de réaction entre une fonction urée ou éthylène urée et un aldéhyde. A ce titre on pourra se référer aux brevets FR-A-2595694, FR-A-2613361 et FR-A-2787458.

La présente invention porte également sur un procédé de préparation du système monocomposant selon l'invention, comprenant les étapes suivantes:
(i) fourniture d'au moins un monomère (a) et d'au moins un monomère (b);
(ii) polymérisation en émulsion en milieu aqueux de chacune des compositions de monomères (a) et (b) séparément, et obtention des dispersions de particules respectivement (A) et (B); et
(iii) mélange des dispersions.

Selon un mode de réalisation préféré, le procédé comprend de plus une étape de synthèse in-situ du monomère (b) par réaction d'une composition de monomère (a) avec un composé précurseur porteur d'une fonction aldéhyde et d'une fonction acétal, mercaptal, mercaptol, dioxolane ou dithiolane, de formule B'1 CHO-(G)-CH(YR³) (ZR⁴).

De préférence, le ou les monomères (a) et (b) représentent de 0,5 à 10% en poids, en particulier de 1 à 5% en poids, de la composition de monomères respectivement A et B. Les monomères (a) et (b) peuvent être introduits de façon homogène avec les autres monomères ou dans des gradients de compositions qui permettent de conduire à des produits ayant des densités de fonctions différentes.

Les proportions des deux latex coréactifs selon la présente invention sont choisies telles que la proportion du polymère (A) est comprise entre 5 et 95% en poids, en particulier entre 25 et 75% en poids, des polymères (A) et (B), et la proportion du polymère (B) est comprise entre 95 et 5% en poids, en particulier entre 75 et 25% en poids, des polymères (A) et (B), les extraits secs de chacune des dispersions étant généralement compris entre 20 et 60% en poids.

Par ailleurs, la dimension des particules de chacune des dispersions (A) et (B) est notamment comprise entre 50 et 500 nm.

Les monomères autres que les monomères (a) et (b) des deux dispersions de particules (A) et (B) de l'invention ne sont pas critiques, dès l'instant où les températures de transition vitreuse (Tg) des copolymères résultants ont été adaptées au domaine d'application visé. La combinaison de monomères capables de conduire à des homopolymères ayant différentes températures de transition vitreuse permet ainsi de régler la température de transition vitreuse de chacun des copolymères obtenus, c'est-à-dire par la combinaison de monomères conduisant à des Tg élevées avec des monomères conduisant à de basses Tg, ce qui est bien connu de l'homme du métier.

A titre d'exemples de monomères capables de conduire à des homopolymères ayant une basse Tg, on peut citer l'acrylate d'éthyle, l'acrylate de butyle, l'acrylate de 2-éthyl hexyle, l'acrylate de nonyle, le vinyl 2-éthyl hexanoate, etc.

A titre d'exemples de monomères capables de conduire à des homopolymères ayant une température de transition vitreuse élevée, on peut citer le méthacrylate de méthyle, l'acétate de vinyle, le styrène, l'acide acrylique, l'acide méthacrylique, l'acrylamide, etc.

Les deux latex selon l'invention sont préparés par polymérisation en émulsion dans les conditions bien connues de l'homme du métier. Ainsi, la réaction est préférentiellement conduite sous atmosphère inerte en présence d'amorceurs radicalaires. Le système d'amorçage utilisé peut être un système oxydo-réducteur tel que K₂S₂O₈, (NH₄)₂S₂O_{8/}Na₂S₂O₅, Na₂SO₃, un système thermique tel que (NH₄)₂S₂O₂, les quantités utilisées étant comprises entre 0,2 et 1,0% en poids par rapport à la masse totale des monomères, préférentiellement entre 0,25 et 0,5% en poids.

La réaction de polymérisation en émulsion selon l'invention est menée à une température comprise entre 65 et 85°C et est fonction de la nature du système d'amorçage utilisé; 65-75°C pour les systèmes Red-Ox à base de peroxodisulfate et de métabisulfite, 70-85°C pour les systèmes thermiques à base de peroxodisulfate seul.

La préparation des dispersions selon l'invention est effectuée de préférence selon un procédé de type semi-continu, permettant de limiter les dérives de composition qui sont fonction des différences de réactivité des différents monomères. L'introduction des monomères sous forme d'une préémulsion avec une partie de l'eau et des tensio-actifs est ainsi généralement réalisée sur une période de temps de 3 heures 30 à 5 heures. Il est également utile, bien que non indispensable, d'effectuer un ensemencement de 1 à 15% des monomères. Les systèmes émulsifiants utilisés dans le procédé de polymérisation en émulsion selon l'invention sont choisis dans la gamme des émulsifiants possédant une balance hydrophile/lipophile adaptée. Les systèmes préférés sont constitués par l'association d'un tensio-actif anionique, tel que le laurylsulfate de sodium, les nonylphénol sulfates éthoxylés en particulier à 20-25 moles d'oxyde d'éthylène, le benzène dodécylsulfonate et les alcools gras éthoxylés sulfates,en particulier à 20-25 moles d'oxyde d'éthylène, et d'un tensio-actif non ionique, tel que les nonylphénols éthoxylés en particulier à 10-40 moles d'oxyde d'éthylène et les alcools gras éthoxylés en particulier à 10-40 moles d'oxyde d'éthylène.

La quantité totale d'émulsifiant est généralement comprise dans la gamme de 1 à 5% en poids et préférentiellement de 2 à 4% en poids par rapport aux monomères.

Les mélanges des dispersions (A) et (B) selon l'invention sont réalisés en général à la température ambiante.

La réticulation à température ambiante peut avoir lieu en général à des températures comprises entre 15 et 30°C, tandis que la post-réticulation peut avoir lieu en général à des températures comprises entre 100°C et 200°C, de préférence comprise entre 120°C et 170°C. Les films issus des mélanges de latex selon l'invention ont été analysés tels qu'obtenus après une semaine de filmification à la température ambiante (23°C), suivie ou non d'un traitement thermique supplémentaire de 75 minutes à 160°C.

Les propriétés des films qui ont été évaluées sont les propriétés mécaniques du film au travers d'un test de traction donnant accès aux valeurs de déformation et de contrainte à la rupture, l'objectif étant d'obtenir un film qui soit à la fois résistant et déformable.

Le degré de réticulation des films -qui gouverne les bonnes propriétés applicatives de celui-ci- est caractérisé ici par une contrainte et un allongement à la rupture les plus élevés possibles.

La réticulation à température ambiante du film issu du mélange de latex A+ B sera mise en évidence par l'obtention de propriétés supérieures à celles de deux latex de référence, l'un non fonctionnalisé, l'autre fonctionnalisé N-méthylolacrylamide, ainsi qu'à celles des latex A et B pris séparément.

L'existence d'une réticulation en température des films est mise en évidence par la comparaison des propriétés avant et après un traitement thermique de 75 minutes à 160°C ainsi que par la comparaison avec un latex de référence fonctionnalisé par 5 parties de N-méthylolacrylamide.

Dans ces conditions, il a été observé que le mélange d'un latex A fonctionnalisé par un monomère porteur d'une fonction uréido (méthacrylate d'éthyle imidazolidone / MEIO) avec un latex B fonctionnalisé par un monomère porteur d'une fonction acétal, éventuellement générée in situ à partir d'un monomère précurseur porteur d'une fonction uréido (MEIO) en présence d'un composé précurseur de la fonction acétal (2,2-diméthoxyéthanal) conduit à un film qui réticule à température ambiante et dont la réticulation est accentuée par un traitement thermique. Ses propriétés sont supérieures à celle des latex A et B pris séparément. De plus, la voie de synthèse choisie pour le monomère (b), préférentiellement généré in-situ le milieu de polymérisation à l'étape de mélange des monomères entrant dans la composition de la dispersion (B), permet un accès facile et peu coûteux à la matière première de base du latex B.

Après traitement thermique à haute température, les propriétés du film issu du mélange de latex A+B sont par ailleurs supérieures à celles obtenues avec un latex de référence fonctionnalisé par 5 parties de N-méthylolacrylamide.

Les performances applicatives du système mono-composant selon l'invention, autrement dit la possibilité d'améliorer les propriétés finales des films de latex utilisés comme revêtements, et notamment la résistance à l'eau et aux solvants, sont mises en évidence par la détermination des propriétés mécaniques (à sec, en milieu aqueux et en milieu alcoolique) d'un film de non-tissé enduit du mélange de latex A + B et la comparaison de ces propriétés avec celles obtenues dans les mêmes conditions pour le latex A seul, ainsi que pour un latex de référence à base de N-méthylolacrylamide (application liant pour le textile).

La présente invention porte également sur l'utilisation du système mono composant à base de latex coréactifs, tel que défini ci-dessus, comme liant dans des compositions destinées à constituer un revêtement exempt de formol réticulable, tel qu'une peinture dans le domaine du bâtiment, un vernis ou un apprêt pour cuirs, un apprêt pour textile, un vernis de protection pour bois, ou dans des compositions pour le couchage du papier; comme liant et/ou agent d'imprégnation pour diverses matières textiles tissées ou non-tissées, papier, carton, nappes de fibres; et comme adhésif, notamment dans l'industrie du bois.

Les exemples suivants illustrent la présente invention sans toutefois en limiter la portée. Dans ces exemples, les parties et pourcentages sont en poids sauf indication contraire. A l'exemple 1, les quantités des ingrédients des formulations et des monomères sont exprimées en parties de matières actives.

### Exemple 1 : Synthèse et caractérisation des latex.

### Mode opératoire général

Dans un réacteur de 3 1, équipé d'une circulation d'eau chaude dans la double enveloppe, d'une agitation centrale et d'un condenseur, on introduit un pied de cuve formulé comme suit :

| **Pied de cuve** | |
|---|---|
| Eau | 75,00 parties |
| Alcool gras éthoxylé sulfate de sodium à 33% dans l'eau | 0,25 parties |
| (Disponil FES 77 commercialisé par la société Cognis) | |
| Alcool gras éthoxylé à 70% dans l'eau (Disponil AFX 3070 commercialisé par la société Cognis) | 0,05 parties |

On homogénéise et on porte à 80°C. Lorsque la température du pied de cuve atteint 80°C, on coule, en l'espace de 4 heures, pour la préémulsion et de 4h30 pour la solution d'amorceur, les deux mélanges formulés comme suit:

| **Pré émulsion** | |
|---|---|
| Eau | 75,00 parties |
| Alcool gras éthoxylé sulfate de sodium à 33% dans l'eau | 2,25 parties |
| Alcool gras éthoxylé à 70% dans l'eau | 0,45 parties |
| Monomères | 100,00 parties |
| Les tensio-actifs sont préalablement solubilisés dans l'eau, puis les monomères additionnés un à un par ordre d'hydrophilie décroissante, sous agitation magnétique. | |
| **Solution d'amorceur** | |
| Eau | 6,00 parties |
| Persulfate de sodium | 0,30 parties |

On laisse réagir une heure supplémentaire à 80°C. On refroidit jusqu'à la température ambiante et on filtre sur une toile de 200 microns.

### Préparation et caractéristiques des latex synthétisés.

On a synthétisé les latex A et B à partir des monomères respectivement A et B tels qu'indiqués dans le Tableau 1, dans lequel sont également indiquées les caractéristiques des latex obtenus.

Dans le cas du latex B, le monomère (b) fonctionnalisé acétal est obtenu in-situ le milieu de polymérisation par mélange, à l'étape de préparation de la pré-émulsion, du monomère précurseur porteur de la fonction uréido (MEIO) et du composé précurseur de la fonction acétal (2,2-diméthoxyéthanal), à température ambiante et à un pH supérieur ou égal à 7.

Le composé 1 est un latex de référence non fonctionnalisé.

Le composé 2 correspond à un latex de référence fonctionnalisé par 5 parties massiques de N-méthylolacrylamide.

**Tableau 1**

| | Latex A | Latex B | Comp. 1 | Comp. 2 |
|---|---|---|---|---|
| Monomères | | | | |
| Méthacrylate de méthyle | 42 | 43 | 50 | 45 |
| Acrylate de butyle | 46 | 46 | 50 | 48 |
| AMPS ⁽¹⁾ | 2 | - | - | - |
| Acide acrylique | | 1 | - | 2 |
| Méthacrylate d'éthyle imidazolidone (MEIO) ⁽²⁾ | 10 | 10 | - | - |
| 2,2-diméthoxyacétaldéhyde ⁽³⁾ | - | 2,25 ⁽⁴⁾ | - | - |
| N-méthylolacrylamide (solution aqueuse à 48%) | - | - | - | 5 |
| Caractéristiques | | | | |
| Extrait sec(%) | 39,5 | 40 | 39,4 | 40 |
| pH | 1,5 ⁽⁵⁾ | 6,4 | 2,2 | 5,8 |
| Diamètre (nm) | 192 | 179 | 160 | 260 |
| Viscosité (mPa.s) | 65 | 65 | 40 | 570 |

| | | | | |
|---|---|---|---|---|
| ⁽¹⁾ Acide acrylamido méthylpropane sulfonique (Aldrich). ⁽²⁾ Solution de méthacrylate d'éthyle imidazolidone à 50% de matière active dans le méthacrylate de méthyle, commercialisée par la société Atofina (Norsocryl 104). ⁽³⁾ Solution de 2,2-diméthoxyacétaldéhyde à 60% de matière active dans l'eau, commercialisée par la société Clariant (Highlink DM). ⁽⁴⁾ Ratio molaire (MEIO / 2,2-diméthoxyacétaldéhyde) = (uréido / aldéhyde)= 1. ⁽⁵⁾ Latex final neutralisé à pH = 8 par addition d'une solution de soude. | | | | |

### Exemple 2 : Propriétés des latex obtenus, A, B, comp 1, comp 2, mélange coréactif A+B.

Les propriétés mécaniques des films issus des latex synthétisés séparément à l'exemple 1 ont été déterminées après une semaine de séchage à 23°C, 50% d'humidité relative, suivie ou non d'un traitement thermique de 75 minutes à 160°C.

Les latex A et B ont été mélangés en quantité équimoléculaire de fonctions uréido et acétal. Les propriétés des films issus de ce mélange ont été aussi examinées après une semaine de séchage à 23°C, 50% d'humidité relative, suivie ou non d'un traitement thermique de 75 minutes à 160°C.

Le test mis en oeuvre est un test de traction aux grandes déformations, réalisé conformément à la norme ISO 527.

Les résultats (valeur moyenne calculée sur un minimum de 3 mesures) sont rapportés dans le Tableau 2.

**Tableau 2**

| Latex | Séchage à 23°C | | Séchage à 160°C | |
|---|---|---|---|---|
| | ^{ε}_{R} (%) ⁽¹⁾ | σ_{R} (MPa) ⁽²⁾ | ε_{R} (%) | σ_{R} (MPa) |
| Comp. 1 | 419 | 5,9 | 429 | 5,9 |
| Comp. 2 | 403 | 2,9 | 333 | 12,9 |
| A | 226 | 4,9 | 276 | 12,7 |
| B | 272 | 6,1 | 291 | 7,0 |
| Mélange équimolaire A+B | 170 | 12,2 | 178 | 19,7 |

| | | | | |
|---|---|---|---|---|
| ⁽¹⁾ Déformation à la rupture, exprimée en % ⁽²⁾ Contrainte à la rupture, exprimée en MPa | | | | |

Le film obtenu à partir du latex de référence fonctionnalisé N-méthylolacrylamide (comp 2) met en évidence l'absence de réticulation à température ambiante, mais une forte tendance à la réticulation thermique (augmentation de la contrainte à la rupture). Les films issus des latex A et B pris séparément et séchés à température ambiante présentent un certain degré de réticulation mis en évidence par une diminution significative de la déformation à la rupture par rapport au latex de référence non fonctionnalisé (comp 1). Le film de latex A présente une tendance à la réticulation thermique (augmentation de la contrainte à la rupture après traitement à 160°C), non observée dans le cas du latex B.

Après séchage à température ambiante, le film obtenu à partir du mélange équimoléculaire des latex co-réactifs A et B présente une contrainte à la rupture supérieure à celle des deux latex de référence ainsi qu'à celle des latex A et B pris séparément, mettant en évidence une forte réticulation à température ambiante. Cette réticulation est accentuée par un post-traitement thermique des films à 160°C, qui permet d'augmenter de près de 60% la contrainte à la rupture sans toutefois réduire la déformation à la rupture et donc la capacité du film à se déformer sans rompre. Les propriétés mécaniques obtenues après traitement thermique du film issu du mélange de latex A+B sont non seulement supérieures à celles des latex A et B seuls, mais également supérieures de plus de 50% à celles du latex de référence fonctionnalisé N-méthylolacrylamide (Comp. 2).

### Exemple 4 : Propriétés applicatives en imprégnation de non tissé (application liant textile)

Le test mis en oeuvre consiste à déterminer les propriétés de résistance à la traction de films de non tissé imprégnés de latex, puis séchés 1 min 30 à 105°C et traités thermiquement pendant 5 minutes à 130°C. Ces tests sont réalisés à sec ou après immersion du non tissé dans un liquide (eau, éthanol), conformément à la norme ISO 9073 décrivant les méthodes d'essais pour non tissés dans le domaine des textiles.

Le tableau 3 présente les résultats obtenus pour le latex A seul, les mélanges de latex A+B à différents rapports molaires uréido/acétal ainsi qu'un latex de référence fonctionnalisé par 5 parties de N-méthylolacrylamide (comp 2).

Les résultats sont exprimés en valeurs de force nécessaire pour rompre l'échantillon (N/m).

**Tableau 3**

| Latex | Résistance à sec (N/m) | Résistance humide (N/m) | Résistance alcool (N/m) |
|---|---|---|---|
| Comp 2 | 2071 | 1307 | 710 |
| A | 2060 | 940 | 492 |
| Mélange A+B (R = 1) ⁽¹⁾ | 1944 | 1219 | 972 |
| Mélange A+B (R = 1,2) ⁽²⁾ | 2145 | 1161 | 996 |

| | | | |
|---|---|---|---|
| ⁽¹⁾ Rapport molaire (acétal / uréido) = 1 ⁽²⁾ Rapport molaire (acétal / uréido) = 1,2 | | | |

Des trois tests réalisés, la résistance en milieu alcool des non-tissés imprégnés de latex, qui est aussi le plus sévère, met en évidence la supériorité des mélanges A+B non seulement par rapport au latex A seul mais aussi par rapport au latex de référence fonctionnalisé N-méthylolacrylamide, considéré comme latex de référence pour l'application liant textile.

## Revendications

1. Système monocomposant à base de latex coréactifs, susceptible de conduire à des revêtements exempts de formol, réticulables à température ambiante et post-réticulables par traitement thermique, ledit système étant constitué par le mélange de deux dispersions de particules, (A) et (B), obtenues chacune par polymérisation en émulsion en milieu aqueux d'une composition de monomères respectivement A et B:
(a) au moins un monomère à insaturation éthylénique polymérisable par voie radicalaire, comportant un groupe fonctionnel, de formule A 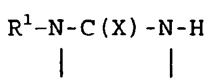 dans laquelle
R¹ est un groupement polymérisable par voie radicalaire;
X représente O ou S,
entrant dans la composition de monomères A;
et
(b) au moins un monomère à insaturation éthylénique polymérisable par voie radicalaire, comportant
- un radical 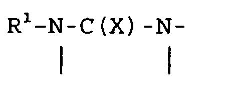 identique ou différent de celui du monomère (a), dans lequel R¹ est un groupement polymérisable par voie radicalaire et X représente O ou S ;
- un groupe fonctionnel choisi parmi acétal, mercaptal, mercaptol, dioxolane et dithiolane, de formule B1
B1 -CHOH- (G) -CH(YR³) (ZR⁴)
dans laquelle
- Y et Z, identiques ou différents, représentent O ou S ;
- G représente une liaison directe ou un reste alkylène en C₁-C₄;
- R³ et R⁴, identiques ou différents, représentent chacun un atome d'hydrogène ou un groupe alkyle en C₁-C₈, ou bien forment ensemble un groupe -CH₂-CR⁵R⁶-(CH₂)ₙ- où n = 0 ou 1 et R⁵ et R⁶, identiques ou différents, représentent chacun un atome d'hydrogène ou un groupe méthyle, entrant dans la composition de monomères B.

2. Système selon la revendication 1, **caractérisé en ce que** le monomère (b) est généré in situ le milieu de polymérisation.

3. Système selon la revendication 1 ou 2, **caractérisé en ce que** le radical des monomères (a) et (b): 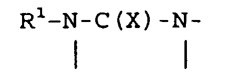 est identique pour ces deux monomères.

4. Système selon l'une des revendications 1 à 3, **caractérisé en ce que** le radical du monomère (a) et/ou (b): 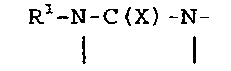 est choisi parmi ceux représentés par les formules (I) à (V) ci-après : 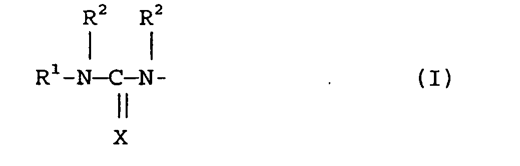 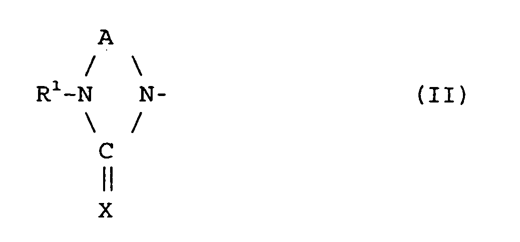 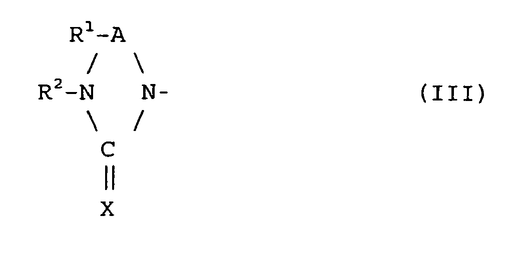 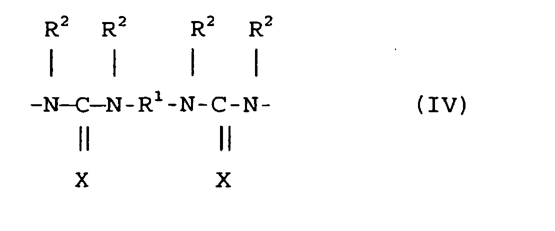 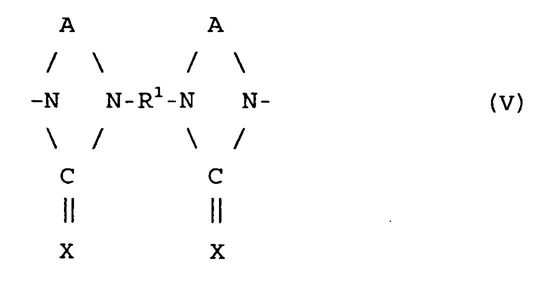 dans lesquelles :
X représente O ou S;
R¹ est un groupement à insaturation éthylénique, polymérisable par voie radicalaire;
R² est un atome d'hydrogène ou un groupe alkyle en C₁-C₈; et
A est une chaîne alkylène à 2 ou 3 atomes de carbone qui peut être substituée par alkyle inférieur en C₁-C₄ et/ou hydroxy et/ou alcoxy en C₁-C₄, et/ou qui peut être interrompue par un groupe carbonyle.

5. Système selon l'une des revendications 1 à 4, **caractérisé par le fait que** R¹ est choisi parmi les groupes:
• CH₂=CH-
• CH₂=CH-CH₂-
• CH₂=C (CH₃) -CH₂-
• CH₂=CH-C (O) -
• CH₂=C(CH₃)-C(O)-
• CH₂=CH-CH₂-O-CH₂-CH (OH) -CH₂-
• R⁷-A¹-Alk-
où :
R⁷ représente un atome d' hydrogène, un groupement 3-alkyloxy-2-hydroxypropyle, vinyle, méthacryloyle, acryloyle ou méthacryloyloxyacéto;
A¹ représente O, NH ou NR⁸;
R⁸ représente 3-allyloxy-2-hydroxypropyle lorsque R⁷ représente 3-allyloxy-2-hydroxypropyle;
Alk représente une chaîne alkylène en C₂-C₈; et
• 2-( beta -carboxyacrylamido)éthyle
• R⁹-A²-C(O)-CH=CH-C(O)- A²- R⁹
où :
A² représente O ou NH ;
R⁹ représente un groupe alkylène en C₁-C₄.

6. Système selon l'une des revendications 1 à 5, **caractérisé en ce que** le radical du monomère (a) et/ou (b): 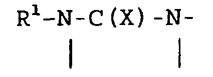 dérive d'un composé choisi parmi la N-(2-méthacryloyloxyéthyl) éthylène urée, la N-(2-acryloyloxyéthyl) éthylène urée, la N-(méthacrylamidométhylène) éthylène urée, la N-(acrylamidométhylène)-éthylène urée, la N-( beta - méthacrylamidoéthyl)-éthylène urée, la N-( beta - acrylamidoéthyl)-éthylène urée, la N-vinyl-éthylène urée, la N-vinyloxyéthyl-éthylène urée, la N-[ beta - méthacryloyloxyacétamido)-éthyl]-N,N'-éthylène urée, la N-[ beta -acryloyloxyacétamido)-éthyl]-éthylène urée, la 1-[2-[[2-hydroxy-3-(2-propényloxy)propyl]amino]éthyl]-2-imidazolidone, la N-méthacrylamidométhyl urée, la N-méthacryloyl urée, le N-(3-[1,3-diazacyclohexan-2-one]propyl)méthacrylamide, la N-hydroxyéthyléthylène urée, la N-aminoéthyl éthylène urée, la N-(3-allyloxy-2-hydroxypropyl)aminoéthyl éthylène urée, la N-méthacrylaminoéthyl éthylène urée, la N-acrylaminoéthyl éthylène urée, la N-méthacryloxyacétoxyéthyl éthylène urée, la N-méthacryloxy-acétaminoéthyl éthylène urée et la N-di(3-allyloxy-2-hydroxy-propyl)aminoéthyl éthylène urée, la N-(2-acryloyl-oxy-éthyl)éthylène urée, la N-méthacrylamidométhyl urée, les allyl alkyl éthylène urées et les composés obtenus par réaction entre un diester d'acide dicarboxylique insaturé et un hydroxyalkylalkylène urée, un aminoalkylalkylène urée, un hydroxyalkylurée ou un aminoalkylurée.

7. Système selon la revendication 6, **caractérisé en ce que** ledit radical dérive du composé N-(2-méthacryloyloxyéthyl)-éthylène urée.

8. Système selon l'une des revendications 1 à 7, **caractérisé en ce que**, dans la formule du monomère (b): 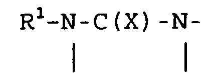 CHOH- (G) -CH (YR³) (ZR⁴)
X, Y et Z, identiques, représentent O;
G représente une liaison directe ou un reste alkylène en C₁-C₄ ;
R¹ est tel que défini dans les revendications 1 à 7 ;
R³ et R⁴, identiques, représentent chacun un groupe alkyle en C₁-C₄.

9. Système selon l'une des revendications 1 à 8, **caractérisé en ce que** le groupe fonctionnel de formule B1 - CHOH-(G)-CH(YR³) (ZR⁴) du monomère (b) dérive d'un composé choisi parmi le 2,2-diméthoxyacétaldéhyde, le 2,2-diéthoxyacétaldéhyde, le 2,2-dipropoxyacétaldéhyde, le 2,2-dibutoxyacétaldéhyde, le 3,3-diméthoxypropanal, le 3,3-diéthoxypropanal, le 3,3-dipropoxypropanal, le 3,3-dibutoxypropanal, le 4,4-diméthoxybutanal, le 4,4-diéthoxybutanal, le 4,4-dipropoxybutanal, le 4,4-dibutoxybutanal, le 5,5-diméthoxypentanal, le 5,5-diéthoxypentanal, le 5,5-dipropoxypentanal, le 5,5-dibutoxypentanal, le 6,6-diméthoxyhexanal, le 6,6-diéthoxyhexanal, le 6,6-dipropoxyhexanal et le 6,6-dibutoxyhexanal.

10. Système selon l'une des revendications 1 à 9, **caractérisé en ce que** le groupe -CHOH- (G) -CH (YR³) (ZR⁴) du monomère (b) dérive du 2,2 diméthoxyacétaldéhyde.

11. Système selon l'une des revendications 1 à 10, **caractérisé par le fait que** le ou les monomères (a) et (b) représentent de 0,5 à 10% en poids de la composition de monomères respectivement A et B.

12. Système selon l'une des revendications 1 à 11, **caractérisé par le fait que** les proportions des deux latex coréactifs sont choisies telles que la proportion du polymère (A) est comprise entre 5 et 95% en poids des polymères (A) et (B), et la proportion du polymère (B) est comprise entre 95 et 5% en poids des polymères (A) et (B), les extraits secs de chacune des dispersions étant compris entre 20 et 60% en poids.

13. Système selon l'une des revendications 1 à 12, **caractérisé par le fait que** la dimension des particules de chacune des dispersions (A) et (B) est comprise entre 50 et 500 nm.

14. Système selon l'une des revendications 1 à 13, **caractérisé par le fait que** les monomères autres que les monomères (a) et (b) des deux dispersions de particules (A) et (B) sont choisis pour que les températures de transition vitreuse (Tg) des copolymères résultants soient adaptées au domaine d'application visé, par la combinaison de monomères capables de conduire à des homopolymères ayant une Tg élevée avec des monomères capables de conduire à des homopolymères ayant une basse Tg.

15. Système selon la revendication 14, **caractérisé par le fait que** les monomères capables de conduire à des homopolymères ayant une basse Tg sont choisis parmi l'acrylate d'éthyle, l'acrylate de butyle, l'acrylate de 2-éthyl hexyle, l'acrylate de nonyle, le vinyl 2-éthyl hexanoate; et les monomères capables de conduire à des homopolymères ayant une Tg élevée sont choisis parmi le méthacrylate de méthyle, l'acétate de vinyle, le styrène, l'acide acrylique, l'acide méthacrylique, l'acrylamide.

16. Utilisation d'un système monocomposant à base de latex coréactifs, tel que défini à l'une des revendications 1 à 15, comme liant dans des compositions destinées à constituer un revêtement exempt de formol réticulable, tel qu'une peinture dans le domaine du bâtiment, un vernis ou un apprêt pour cuirs, un apprêt pour textile, un vernis de protection pour bois, ou dans des compositions pour le couchage du papier; comme liant et/ou agent d'imprégnation pour diverses matières textiles tissées ou non-tissées, papier, carton, nappes de fibres; et comme adhésif, notamment dans l'industrie du bois.

17. Procédé de préparation de système monocomposant selon l'une des revendications 1 à 15, comprenant les étapes suivantes:
(i) fourniture d'au moins un monomère (a) et d'au moins un monomère (b);
(ii) polymérisation en émulsion en milieu aqueux de chacune des compositions de monomères (a) et (b) séparément, et obtention des dispersions de particules respectivement (A) et (B); et
(iii) mélange des dispersions.

18. Procédé selon la revendication 17 comprenant de plus une étape de synthèse in-situ du monomère (b) par réaction d'une composition de monomère (a) avec un composé porteur d'une fonction aldéhyde et précurseur de la fonction acétal, mercaptal, mercaptol, dioxolane ou dithiolane de formule B'1 CHO- (G) - CH (YR³) (ZR⁴).

## Claims

1. Single-component system based on co-reactive latexes, suitable for leading to formol-free coatings, which can be cross-linked at ambient temperature and post-cross-linked by heat treatment, said system being constituted by the mixture of two dispersions of particles, (A) and (B), each obtained by polymerization in emulsion in aqueous medium of a composition of monomers A and B respectively:
(a) at least one monomer with an ethylene unsaturation polymerizable by radical route, comprising a functional group, of formula A 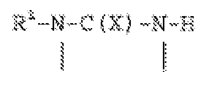 in which
R¹ is a group polymerizable by radical route;
X represents O or S, entering into the composition of monomers A;
and
(b) at least one monomer with an ethylene unsaturation polymerizable by radical route, comprising
- an 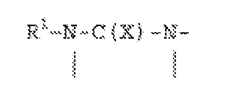 radical identical or different to that of monomer (a), in which R¹ is a group polymerizable by radical route and X represents O or S;
- a functional group chosen from acetal, mercaptal, mercaptol, dioxolane and dithiolane, of formula B1
B1: -CHOH-(G)-CH(YR³)(ZR⁴)
in which
- Y and Z, identical or different, represent O or S;
- G represents a direct bond or a C₁-C₄ alkylene radical;
- R³ and R⁴, identical or different, each represent a hydrogen atom or a C₁-C₈ alkyl group, or together form a -CH₂-CR⁵R⁶-(CH₂)ₙ- group where n = 0 or 1 and R⁵ and R⁶, identical or different, each represent a hydrogen atom or a methyl group, entering into the composition of monomers B.

2. System according to claim 1, **characterized in that** the monomer (b) is generated in situ in the polymerization medium.

3. System according to claim 1 or 2, **characterized in that** the radical of the monomers (a) and (b): 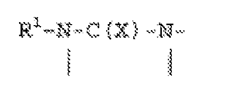 is identical for these two monomers.

4. System according to one of claims 1 to 3, **characterized in that** the radical of the monomer (a) and/or (b): 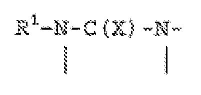 is chosen from those represented by the formulae (I) to (V) hereafter: 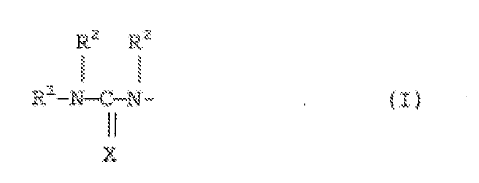 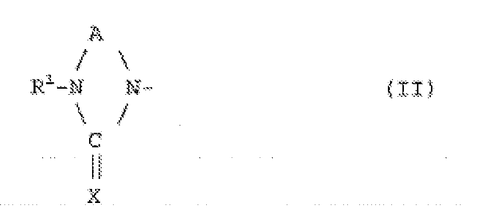 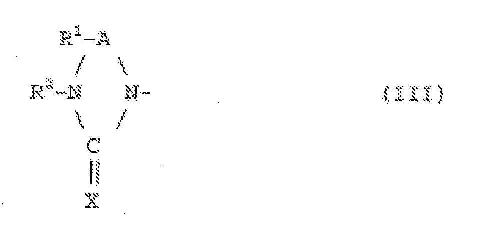 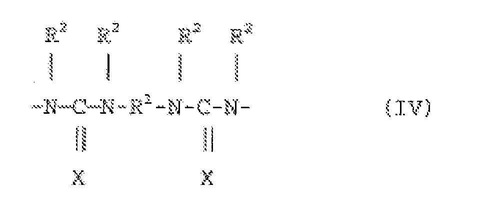 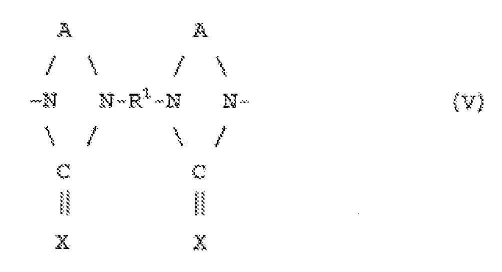 in which: X represents O or S;
R¹ is a group with an ethylene unsaturation, polymerizable by radical route;
R² is a hydrogen atom or a C₁-C₈ alkyl group; and
A is an alkylene chain with 2 or 3 carbon atoms which can be substituted by C₁-C₄ lower alkyl and/or hydroxy and/or C₁-C₄ alkoxy, and/or which can be interrupted by a carbonyl group.

5. System according to anyone of the claims 1 to 4, **characterized by** the fact that R¹ is chosen from the groups:
CH₂=CH-
CH₂=CH-CH₂-
CH₂=C(CH₃)-CH₂-
CH₂=CH-C(O)-
CH₂=C(CH₃)-C(O)-
CH₂=CH-CH₂-O-CH₂-CH(OH)-CH₂-
R⁷-A¹-Alk
where:
R⁷ represents a hydrogen atom, a 3-alkyloxy-2-hydroxypropyl, vinyl, methacryloyl, acryloyl or methacryloyloxyaceto group;
A¹ represents O, NH or NR⁸;
R⁸ represents 3-allyloxy-2-hydroxypropyl when R⁷ represents 3-allyloxy-2-hydroxypropyl;
Alk represents a C₂-C₈ alkylene chain; and
2-(beta-carboxyacrylamido)ethyl
R⁹-A²-C(O)-CH=CH-C(O)-A²-R⁹
where:
A² represents O or NH;
R⁹ represents a C₁-C₄ alkylene group.

6. System according to anyone of claims 1 to 5, **characterized in that** the radical of the monomers (a) and/or (b): 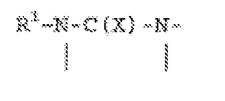 is derived from a compound chosen from N-(2-methacryloyloxyethyl)ethylene urea, N-(2-acryloyloxyethyl) ethylene urea, N-(methacrylamidomethylene) ethylene urea, N-(acrylamidomethylene)-ethylene urea, N-(beta methacrylamidoethyl)-ethylene urea, N-(beta acrylamidoethyl-ethylene urea, N-vinyl-ethylene urea, N-vinyloxyethyl-ethylene urea, N-[beta methacryloyloxyacetamido)-ethyl]-N,N'-ethylene urea, N-[beta-acryloyloxyacetamido)-ethyl]-ethylene urea, 1-[2-[[2-hydroxy-3-(2-propenyloxy)propyl]amino]ethyl]-2-imidazolidone, N-methacrylamidomethyl urea, N-methacryloyl urea, N-(3-[1,3-diazacyclohexan-2-one]propyl)methacrylamide, N-hydroxyethylethylene urea, N-aminoethyl ethylene urea, N-(3-allyloxy-2-hydroxypropyl) aminoethyl ethylene urea, N-methacrylaminoethyl ethylene urea, N-acrylaminoethyl ethylene urea, N-methacryloxyacetoxyethyl ethylene urea, N-methacryloxy-acetaminoethyl ethylene urea and N-di(3-allyloxy-2-hydroxy-propyl) aminoethyl ethylene urea, N-(2-acryloyl-oxy-ethyl) ethylene urea, N-methacrylamidomethyl urea, allyl alkyl ethylene ureas and the compounds obtained by the reaction between an unsaturated dicarboxylic acid diester and a hydroxyalkylalkylene urea, an aminoalkylalkylene urea, a hydroxyalkylurea or an aminoalkylurea.

7. System according to claim 6, **characterized in that** said radical is derived from the compound N- (2-methacryloyloxyethyl) - ethylene urea.

8. System according to one of claims 1 to 7, **characterized in that**, in the formula of the monomer (b): 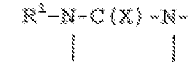 CHOH- (G) -CH(YR³) (ZR⁴)
X, Y and Z, identical, represent O;
G represents a direct bond or a C₁-C₄ alkylene radical;
R¹ is as defined in claims 1 to 7;
R³ and R⁴, identical, each represent a C₁-C₄ alkyl group.

9. System according to anyone of claims 1 to 8, **characterized in that** the functional group of formula B1 -CHOH-(G)-CH(YR³)(ZR⁴) of the monomer (b) is derived from a compound chosen from 2,2-dimethoxyacetaldehyde, 2,2- diethoxyacetaldehyde, 2,2-dipropoxyacetaldehyde, 2,2- dibutoxyacetaldehyde, 3,3-dimethoxypropanal, 3,3-diethoxypropanal, 3,3-dipropoxypropanal, 3,3-dibutoxypropanal, 4,4-dimethoxybutanal, 4,4-diethoxybutanal, 4,4-dipropoxybutanal, 4,4-dibutoxybutanal, 5,5-dimethoxypentanal, 5,5- diethoxypentanal, 5,5-dipropoxypentanal, 5,5-dibutoxypentanal, 6,6-dimethoxyhexanal, 6,6-diethoxyhexanal, 6,6-dipropoxyhexanal and 6,6- dibutoxyhexanal.

10. System according to anyone of claims 1 to 9, **characterized in that** the CHOH-(G)-CH(YR³)(ZR⁴) group of the monomer (b) is derived from 2,2-dimethoxyacetaldehyde.

11. System according to anyone of claims 1 to 10, **characterized by** the fact that the monomers (a) and (b) represent 0.5 to 10% by weight of the composition of monomers A and B respectively.

12. System according to anyone of claims 1 to 11, **characterized by** the fact that the proportions of the two co-reactive latexes are chosen such that the proportion of the polymer (A) is comprised between 5 and 95% by weight of the polymers (A) and (B), and the proportion of the polymer (B) is comprised between 95 and 5% by weight of the polymers (A) and (B), the dry extracts of each of the dispersions being comprised between 20 and 60% by weight.

13. System according to anyone of claims 1 to 12, **characterized by** the fact that the dimensions of the particles of each of the dispersions (A) and (B) are comprised between 50 and 500 nm.

14. System according to one of claims 1 to 13, **characterized by** the fact that the monomers other than the monomers (a) and (b) of the two dispersions of particles (A) and (B) are chosen so that the glass transition temperatures (Tg) of the resultant copolymers are adapted to the intended field of application, by the combination of monomers suitable for leading to homopolymers having a high Tg with monomers suitable for leading to homopolymers having a low Tg.

15. System according to claim 14, **characterized by** the fact that the monomers suitable for leading to homopolymers having a low Tg are chosen from ethyl acrylate, butyl acrylate, 2-ethyl hexyl acrylate, nonyl acrylate, vinyl 2-ethyl hexanoate; and the monomers suitable for leading to homopolymers having a high Tg are chosen from methyl methacrylate, vinyl acetate, styrene, acrylic acid, methacrylic acid, acrylamide.

16. Use of a single-component system based on co-reactive latex, as defined in anyone of claims 1 to 15, as a binding agent in compositions intended to constitute a cross-linkable formol-free coating, such as a paint in the building field, a varnish or a dressing for leather, a finish for textiles, a wood-protection varnish, or in compositions for the coating of paper; as a binding agent and/or an impregnation agent for various woven or non-woven textile materials, paper, cardboard, laps; and as an adhesive, in particular in the wood industry.

17. Method for the preparation of a single-component system according to anyone of claims 1 to 15, comprising the following stages:
(i) provision of at least one monomer (a) and at least one monomer (b);
(ii) polymerization in emulsion in aqueous medium of each of the compositions of monomers (a) and (b) separately, and the obtaining of dispersions of particles (A) and (B) respectively and
(iii) mixture of the dispersions.

18. Method according to claim 17 comprising in addition an in-situ synthesis stage of monomer (b) by reaction of a composition of monomer (a) with a compound carrying an aldehyde function and a precursor of the acetal, mercaptal, mercaptol, dioxolane or dithiolane function, of formula B'1 CHO-(G)-CH(YR³) (ZR⁴).

## Patentansprüche

1. Einkomponentensystem auf Basis miteinander reagierender milchiger Dispersionen, welches dazu geeignet ist, zu formaldehydfreien Beschichtungen zu führen, die bei Raumtemperatur versetzbar und durch Wärmebehandlung nachvernetzbar sind, wobei das System durch Vermischen zweier Partikeldispersionen, (A) und (B), hergestellt wird, welche jeweils erhalten werden, indem Monomerzusammensetzung A beziehungsweise B in einer Emulsion im wässrigen Milieu folgendermaßen polymerisiert wird:
a) mindestens ein ethylenisch ungesättigtes Monomer auf radikalischem Wege, eine funktionelle Gruppe der Formel A aufweisend 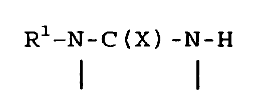 in welcher
R¹ eine radikalisch polymerisierbare Gruppe ist; X für O oder S steht,
wobei dieser Bestandteil der Zusammensetzung der Monomere A wird; und
(b) mindestens ein ethylenisch ungesättigtes Monomer auf radikalischem Wege, aufweisend
- ein Radikal 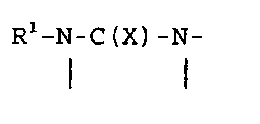
- das identisch mit demjenigen des Monomers (a) ist oder sich davon unterscheidet, wobei R¹ eine radikalisch polymerisierbare Gruppe ist und X für O oder S steht;
- eine funktionelle Gruppe, die aus Acetal, Mercaptal, Mercaptol, Dioxolan und Dithiolan gewählt ist und die Formel B1 aufweist
B1 -CHOH-(G)-CH(YR³)(ZR⁴)
in welcher
- Y und Z, die identisch oder verschiedenartig sind, O oder S darstellen;
- G für eine direkte Bindung oder einen C₁-C₄-Alkylenrest steht;
- R³ und R⁴, die identisch oder verschiedenartig sind, jeweils für ein Wasserstoffatom oder eine C₁-C₈-Alkylgruppe stehen oder gemeinsam eine -CH₂-CR⁵R⁶-(CH₂)ₙ-Cruppe bilden, wobei n = 0 oder 1 ist und R⁵ und R⁶, die identisch oder verschiedenartig sind, jeweils für ein Wasserstoffatom oder eine Methylgruppe stehen,
wobei dieser Bestandteil der Zusammensetzung der Monomere B wird.

2. System nach Anspruch 1, **dadurch gekennzeichnet, dass** das Monomer (b) im Polymerisationsmilieu in situ erzeugt wird.

3. System nach den Ansprüchen 1 oder 2, **dadurch gekennzeichnet, dass** das Radikal der Monomere (a) und (b): 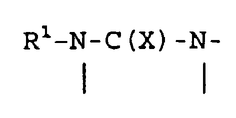 für diese beiden Monomere identisch ist.

4. System nach den Ansprüchen 1 bis 3, **dadurch gekennzeichnet, dass** das Radikal des Monomers (a) und/oder (b): 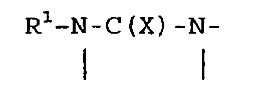 aus denjenigen gewählt ist, die in den nachstehenden Formeln (I) bis (V) dargestellt sind: 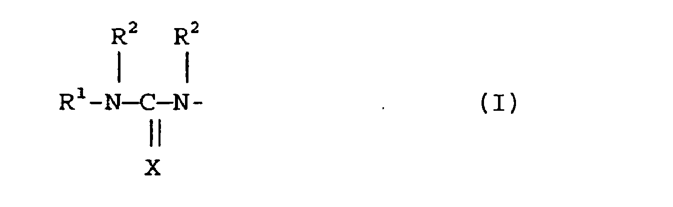 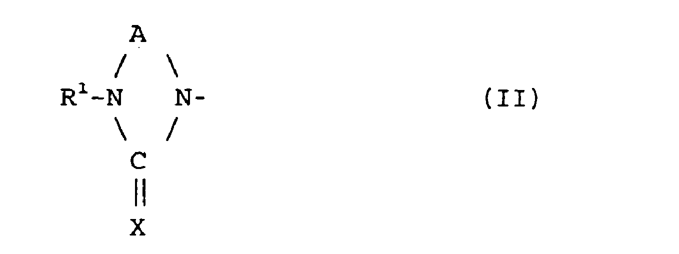 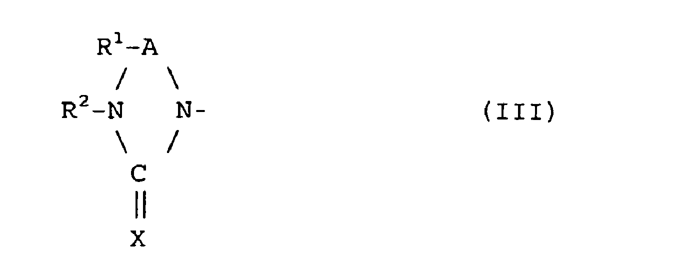 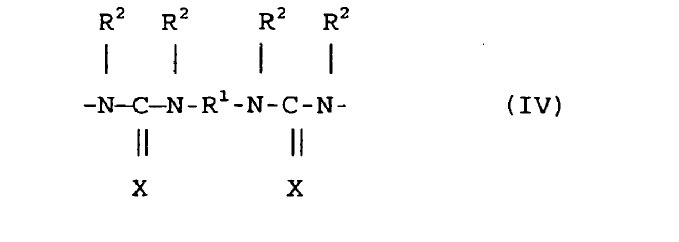 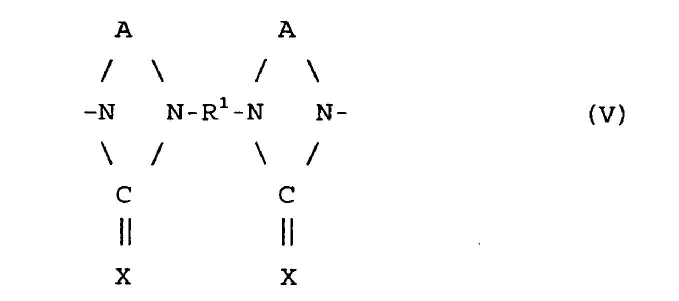 wobei:
X für O oder S steht;
R¹ eine ethylenisch ungesättigte Gruppe ist, die radikalisch polymerisierbar ist;
R² ein Wasserstoffatom oder eine C₁-C₈-Alkylgruppe ist; und
A eine Alkylenkette mit 2 oder 3 Kohlenstoffatomen ist, welche mit einem kurzkettigen C₁-C₄-Alkyl und/oder einem Hydroxyl und/oder einem C₁-C₄-Alkoxy substituiert und/oder durch eine Carbonylgruppe unterbrochen sein kann.

5. System nach einem der Ansprüche 1 bis 4, **dadurch gekennzeichnet, dass** R¹ aus den folgenden Gruppen gewählt ist:
• CH₂=CH-
• CH₂=CH-CH₂-
• CH₂=C(CH₃)-CH₂-
• CH₂=CH-C(O)-
• CH₂=C(CH₃)-C(O)-
• CH₂=CH-CH₂-O-CH₂-CH(OH)-CH₂-
• R⁷-A¹-Alk-
wobei:
R⁷ für ein Wasserstoffatom, eine 3-Alkyloxy-2-hydroxypropyl-, Vinyl-, Methacrylat-, Acrylat- oder eine Methacrylatoxyacetogruppe steht;
A¹ für O, NH oder NR⁸ steht;
R⁸ für 3-Allyloxy-2-hydroxypropyl steht, wenn R⁷ für 3-Allyloxy-2-hydroxypropyl steht;
Alk für eine C₂-C₈-Alkylenkette steht; und
• 2-(beta-Carboxyacrylamido)ethyl
• R⁹-A²-C(O)-CH=CH-C(O)-A²-R⁹
wobei:
A² für O oder NH steht;
R⁹ für eine C₁-C₄-Alkylengruppe steht.

6. System nach den Ansprüchen 1 bis 5, **dadurch gekennzeichnet, dass** das Radikal des Monomers (a) und/oder (b): 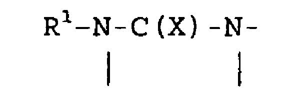 sich von einer Verbindung ableitet, die aus N-(2-Methacrylatoxyethyl)ethylenharnstoff, N-(2-acrylatoxyethyl)ethylenharnstoff, N-(Methacrylamidomethylen)ethylenharnstoff, N-(Acrylamidomethylen)-ethylenharnstoff, N-(beta-Methacrylamidoethyl)-ethylenharnstoff, N-(beta-Acrylamidoethyl)-ethylenharnstoff, N-Vinyl-ethylenharnstoff, N-Vinyloxyethyl-ethylenharnstoff, N-[beta-Methacrylatoxyacetamido)-ethyl]-N,N-ethylenharnstoff, N-[beta-Acrylatoxyacetamido)-ethyl]-ethylenharnstoff, 1-[2-[[2-Hydroxy-3-(2-propenyloxy)propyl]amino]ethyl]-2-imidazolidon, N-methacrylamidomethylharnstoff, N-Methacrylatharnstoff, N-(3-[1,3-Diazacyclohexan-2-on]propyl)methacrylamid, N-Hydroxyethylethylenharnstoff, N-Aminoethylethylenharnstoff, N-(3-Allyloxy-2-hydroxypropyl)aminoethylethylenharnstoff, N-Methacrylaminoethylethylenharnstoff, N-Acrylaminoethylethylenharnstoff, N-Methacryloxyacetoxyethylethylenharnstoff, N-Methacryloxyacetaminoethylethylenharnstoff und N-Di(3-allyloxy-2-hydroxy-propyl)aminoethylethylenharnstoff, N-(2-acrylat-oxy-ethyl)ethylenharnstoff, N-Methacrylamidomethylharnstoff, den Allylalkylethylenharnstoffen und den Verbindungen, die durch die Umsetzung eines ungesättigten Dicarbonsäurediesters mit einem Hydroxyalkylalkylenharnstoff, einem Aminoalkylalkylenharnstoff, einem Hydroxyalkylharnstoff oder einem Aminoalkylharnstoff erhalten werden, gewählt ist.

7. System nach Anspruch 6, **dadurch gekennzeichnet, dass** das Radikal sich von der Verbindung N-(2-Methacrylatoxyethyl)ethylenharnstoff ableitet.

8. System nach den Ansprüchen 1 bis 7, **dadurch gekennzeichnet, dass** in der Formel des Monomers (b): 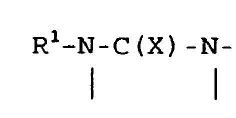 CHOH- (G) -CH (YR³) (ZR⁴)
X, Y und Z, die identisch sind, O darstellen;
G für eine direkte Bindung oder einen C₁-C₄-Alkylenrest steht;
R¹ der Begriffsbestimmung in den Ansprüchen 1 bis 7 entspricht;
R³ und R⁴, die identisch sind, jeweils eine C₁-C₄-Alkylgruppe darstellen.

9. System nach einem der Ansprüche 1 bis 8, **dadurch gekennzeichnet, dass** die funktionelle Gruppe nach Formel B1 - CHOH-(G)-CH(YR³)(ZR⁴) des Monomers (b) sich von einer Verbindung ableitet, die aus 2,2-Dimethoxyacetaldehyd, 2,2-Diethoxyacetaldehyd, 2,2-Dipropoxyacetaldehyd, 2,2-Dibutoxyacetaldehyd, 3,3-Dimethoxypropanal, 3,3-Diethoxypropanal, 3,3-Dipropoxypropanal, 3,3-Dibutoxypropanal, 4,4-Dimethoxybutanal, 4,4-Diethoxybutanal, 4,4-Dipropoxybutanal, 4,4-Dibutoxybutanal, 5,5-Dimethoxypentanal, 5,5-Diethoxypentanal, 5,5-Dipropoxypentanal, 5,5-Dibutoxypentanal, 6,6-Dimethoxyhexanal, 6,6-Diethoxyhexanal, 6,6-Dipropoxyhexanal und 6,6-Dibutoxyhexanal gewählt ist.

10. System nach einem der Ansprüche 1 bis 9, **dadurch gekennzeichnet, dass** die Gruppe -CHOH-(G)-CH(YR³)(ZR⁴) des Monomers (b) sich von 2,2-Dimethoxyacetaldehyd ableitet.

11. System nach einem der Ansprüche 1 bis 10, **dadurch gekennzeichnet, dass** das oder die Monomere (a) und (b) 0,5 bis 10 Gewichts% der Zusammensetzung der Monomere A beziehungsweise B ausmachen.

12. System nach einem der Ansprüche 1 bis 11, **dadurch gekennzeichnet, dass** die Anteile der beiden miteinander reagierenden milchigen Dispersionen derart gewählt sind, dass der Anteil des Polymers (A) an den Polymerem (A) und (B) 5 bis 95 Gewichts% beträgt und der Anteil des Polymers (B) an den Polymerem (A) und (B) 5 bis 95 Gewichts% beträgt, wobei der Trockenmassegehalt jeder der Dispersionen 20 bis 60 Gewichts% beträgt.

13. System nach einem der Ansprüche 1 bis 12, **dadurch gekennzeichnet, dass** die Partikelgröße bei jeder der Dispersionen (A) und (B) 50 bis 500 nm beträgt.

14. System nach einem der Ansprüche 1 bis 13, **dadurch gekennzeichnet, dass** die Monomere der beiden Partikeldispersionen (A) und (B), die sich von den Monomeren (a) und (b) unterscheiden, derart gewählt sind, dass die Glasübergangstemperaturen (Tg) der erhaltenen Copolymere sich für den vorgesehenen Anwendungsbereich eignen, und zwar durch die Kombination von Monomeren, die dazu befähigt sind, zu Homopolymeren mit einer hohen Tg zu führen, mit Monomeren, die dazu befähigt sind, zu Homopolymeren mit einer niedrigen Tg zu führen.

15. System nach Anspruch 14, **dadurch gekennzeichnet, dass** die Monomere, die dazu befähigt sind, zu Homopolymeren mit einer niedrigen Tg zu führen, aus Ethylacrylat, Butylacrylat, 2-Ethylhexylacrylat, Nonylacrylat, Vinyl-2-Ethylhexanoat gewählt sind; und die Monomere, die dazu befähigt sind, zu Homopolymeren mit einer hohen Tg zu führen, aus Methylmethacrylat, Vinylacetat, Styrol, Acrylsäure, Methacrylsäure, Acrylamid gewählt sind.

16. Verwendung eines Einkomponentensystems auf Basis miteinander reagierender milchiger Dispersionen gemäß der Begriffsbestimmung in einem der Ansprüche 1 bis 15 als Bindemittel in Zusammensetzungen, die dazu bestimmt sind, eine vernetzbare formaldehydfreie Beschichtung herzustellen, wie etwa ein Anstrichmittel im Bauwesen, einen Lack oder eine Ausrüstung für Lederwaren, eine Textilausrüstung, einen Holzschutzlack, oder in Zusammensetzungen zum Beschichten von Papier; als Bindemittel und/oder Imprägnierungsmittel für verschiedenartige textile Web- und Vliesstoffe, Papier, Pappe, Fasermatten; und als Klebstoff, insbesondere in der Holzindustrie.

17. Verfahren zur Herstellung eines Einkomponentensystems nach einem der Ansprüche 1 bis 15, welches die folgenden Schritte umfasst:
(i) Bereitstellen mindestens eines Monomers (a) und mindestens eines Monomers (b);
(ii) getrenntes Polymerisieren jeder der Monomerzusammensetzungen (a) und (b) in einer Emulsion im wässrigen Milieu, und Erhalten der Partikeldispersionen (A) beziehungsweise (B); und
(iii) Vermischen der Dispersionen.

18. Verfahren nach Anspruch 17, das darüber hinaus einen Schritt der in-situ-Synthese des Monomers (b) umfasst, bei welchem eine Monomerzusammensetzung (a) mit einer Verbindung umgesetzt wird, die eine Aldehydfunktion aufweist und als Vorstufe der Acetal-, Mercaptal-, Mercaptol-, Dioxolan oder Dithiolanfunktion der Formel B'1 CHO-(G)-CH(YR³)(ZR⁴) dient.
